# FASCICULE DE BREVET EUROPEEN

(11) **EP 1 185 452 B1**
(45) Date de publication et mention de la délivrance du brevet: **05.11.2003**
(21) Numéro de dépôt: 00936955.4
(22) Date de dépôt: 29.05.2000
(51) Int. Cl.: B62M 1/16

(54) **CYCLE DE PROPULSION HUMAINE A MECANISME DE RAMEUR**
DURCH MUSKELKRAFT ANGEBTRIEBENES FAHRRAD
CYCLE A PROPULSION HUMAINE A MECANISME DE RAMEUR

(30) Priorité: 28.05.1999 FR 9906914
(43) Date de publication de la demande: 13.03.2002
(73) Titulaire: Suptil, Thierry, 73000 Chambéry (FR)
(72) Inventeur: Suptil, Thierry, 73000 Chambéry (FR)
(74) Mandataire: Hecké, Gérard
(86) Numéro de dépôt international: FR0001452
(87) Numéro de publication internationale: WO00073128

(56) Documents cités:
- EP-A- 0 197 569
- DE-A- 19 614 836

## Description

### Domaine technique de l'invention

L'invention est relative à un cycle à propulsion humaine comprenant :
- un châssis à poutre rectiligne équipée d'une roue avant directrice et d'une roue arrière motrice,
- des moyens d'actionnement à manche de préhension piloté par l'utilisateur selon un mouvement de va-et-vient de rameur,
- un mécanisme de commande transformant ledit mouvement de va-et-vient en un mouvement de rotation de la roue arrière,
- et des moyens de guidage en rotation de la roue avant directrice.

### Etat de la technique

Les cycles à propulsion humaine transformant un mouvement de rameur exercé par l'utilisateur en un déplacement identique à celui d'un vélo classique, sont bien connus. Ces cycles s'adressent aux pratiquants de l'aviron désireux de découvrir de nouveaux terrains d'entraînement, ou aux habitués du vélo souhaitant d'avoir un entraînement musculaire complet. Il est ainsi possible d'associer les bienfaits de l'aviron aux plaisirs du vélo.

De tels cycles sont décrits dans les documents DE 196 14 836 et EP 0 197 569. Les mécanismes de transmission utilisés pour le guidage directionnel et pour transformer le mouvement de va-et-vient en un mouvement de rotation de la roue, nécessitent des cinématiques compliquées.

### Objet de l'invention

L'objet de l'invention consiste à réaliser un cycle à mécanisme de rameur facile à mettre en oeuvre, et bénéficiant d'une bonne stabilité dans les virages.

Le dispositif selon l'invention est caractérisé en ce que le mécanisme de commande comporte :
- un dispositif de direction et de maintien constitué par un système d'actionnement téléscopique à tubes articulés selon des parallélogrammes déformables dans la direction longitudinale de la poutre,
   et des moyens de centrage axial pour conserver en permanence l'axe du manche dans le plan médian vertical passant par la poutre.

Selon une caractéristique de l'invention, les moyens de centrage axial comportent au moins une paire de pignons ou secteurs dentés reliés par des biellettes au système d'actionnement téléscopique.

L'utilisateur, assis sur le siège, les pieds sur les cale-pieds, et les mains sur le manche, effectue un mouvement de rameur. La présence du système d'actionnement téléscopique empêche tout débattement latéral du manche, l'axe de ce demier restant en permanence dans le plan médian vertical passant par la poutre centrale du châssis.

Selon un mode de réalisation préférentiel, le mécanisme de commande comprend un dispositif de transmission doté d'un câble tracteur ayant une extrémité solidaire du manche à mouvement de va-et-vient, et une extrémité opposée en liaison avec la chaîne d'entraînement de la roue libre de la roue arrière. Le câble tracteur passe par au moins une poulie de renvoi et à travers l'intérieur creux de la poutre centrale. Les moyens de guidage en rotation de la roue avant directrice comportent un câble de direction relié à une poulie de commande solidaire du manche, et à une poulie de manoeuvre accouplée à la fourche avant rotative de la roue directrice. La partie intermédiaire du câble de direction passe en zig-zag sur des poulies prévues le long des bords opposés des parallélogrammes du système d'actionnement téléscopique, et sur au moins une poulie de renvoi située à l'avant du cycle.

Selon une autre caractéristique de l'invention, le dispositif de direction et de maintien est monté à pivotement limité autour d'un axe transversal entre une position abaissée sensiblement horizontale, et une position relevée.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est vue en profil du cycle équipé du mécanisme selon l'invention, le dispositif de direction et de maintien se trouvant dans la position normale abaissée ;
- la figure 2 montre une vue identique de la figure 1, le dispositif de direction et de maintien se trouvant dans la position relevée ;
- la figure 3 représente une vue en plan du dispositif de direction et de maintien de la figure 1 en position replié ;
- la figure 4 est une vue identique de la figure 3 en position déployée du dispositif de direction et de maintien ;
- la figure 5 est une vue de profil de la figure 4.

### Description d'un mode de réalisation préférentiel

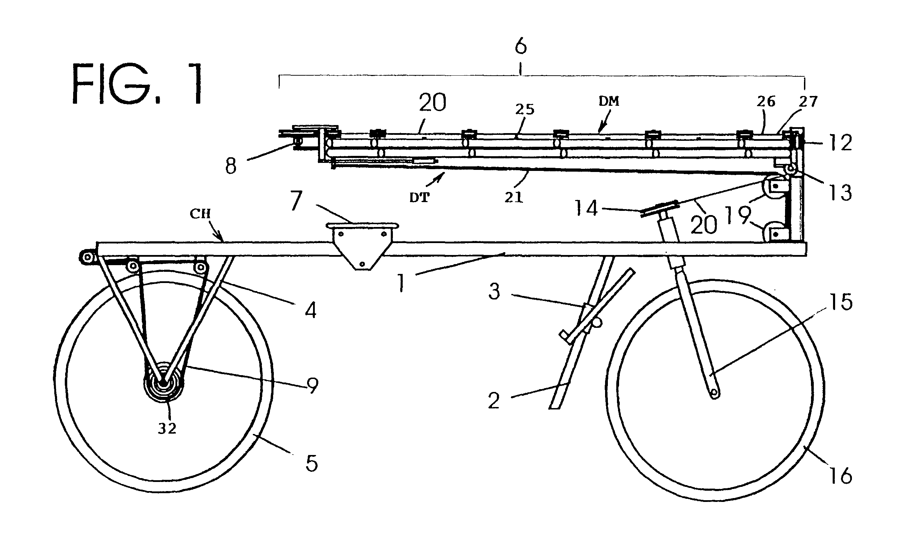

En référence aux figures 1 à 5, un cycle à propulsion humaine comporte une roue arrière 5 motrice, une roue avant 16 directrice, un châssis CH agencé entre les deux roues 5, 16, et un mécanisme de commande 6 piloté par l'utilisateur.

Le châssis 1 comprend une poutre 1 rigide s'étendant dans la direction longitudinale, et servant de support à une fourche arrière 4 de réception de la roue arrière 5 motrice, et à un étrier 2 autorisant le réglage en hauteur de la position d'une paire de cale-pieds 3. Un siège 7 est monté à coulissement sur la poutre 1 entre deux butées délimitant une position avancée et une position reculée.

Le mécanisme de commande 6 comporte un dispositif de direction et de maintien DM associé à un dispositif de transmission DT du mouvement de rameur à la roue arrière 5 motrice.

Le dispositif de direction et de maintien DM est équipé d'un manche 8 en forme de guidon orientable par l'utilisateur autour d'un axe vertical pour le guidage du cycle. Le manche 8 est accouplé à un système d'actionnement 25 téléscopique, lequel est formé par des tubes 17 articulés selon des parallélogrammes déformables dans la direction longitudinale. A l'avant, le système d'actionnement 25 téléscopique est relié par des biellettes 26, 27 à deux pignons 18 rotatifs ou secteurs dentés interdisant le débattement du manche 8 hors du plan vertical médian passant par l'axe longitudinal de la poutre 1. A l'opposé des pignons 18, le système d'actionnement 25 téléscopique est doté d'un organe d'accouplement 28 engagé dans une rainure 29 axiale du manche 8. Il est clair que l'organe d'accouplement 28 peut être remplacé par une paire de pignons du même type que les secteurs dentés 18 pour assurer l'alignement longitudinal du système d'actionnement 25 téléscopique.

Le déplacement rectiligne alternatif du manche 8 par rapport à la position des cale-pieds 3 provoque l'entraînement en rotation de la roue motrice 5 par l'intermédiaire du dispositif de transmission DT. Ce dernier comporte un câble tracteur 21 amarré à une attache 30 au niveau du manche 8, et passant sur deux poulies 19 de renvoi avant de traverser longitudinalement l'intérieur creux de la poutre 1 de l'avant vers l'arrière. A l'opposé de l'attache 30, l'autre extrémité du câble tracteur 21 tire sur la chaîne 9 engrenant sur un pignon de la roue libre 32 lors du mouvement de va-et-vient du manche 8. Un dispositif de dérailleur (non représenté) permet d'ajuster le rapport de développement en fonction des capacités physiques de l'utilisateur.

La conduite du cycle est assurée par un câble de direction 20 entraîné par une poulie de commande 10 solidaire du manche 8, et relié à l'autre bout à une poulie de manoeuvre 14 accouplée à la fourche avant 15 rotative de la roue directrice 16. La partie intermédiaire du câble de direction 20 passe en zig-zag sur des poulies 11 prévues sur les bords latéraux opposés des parallélogrammes du système d'actionnement 25 téléscopique, et sur des poulies de renvoi 12, 13 situées à l'avant du cycle.

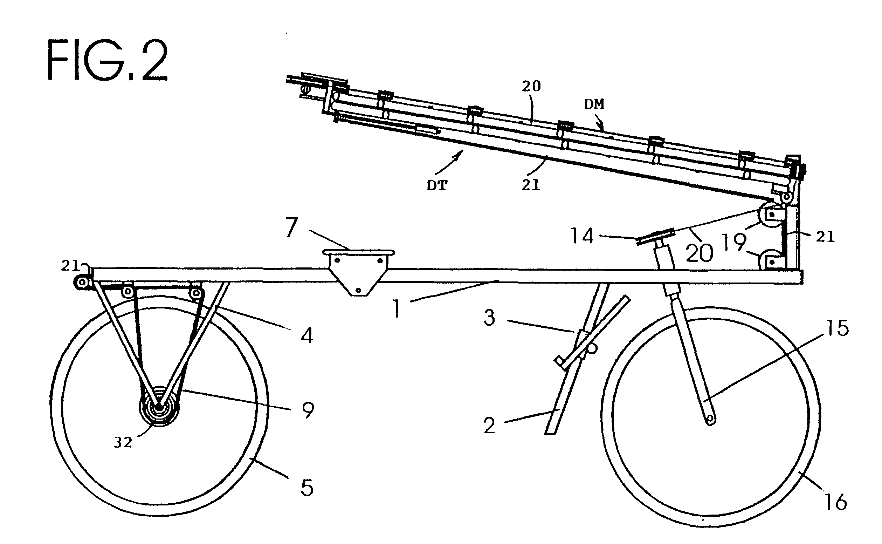

Le dispositif de direction et de maintien DM du mécanisme de commande 6 est monté à pivotement limité autour d'un axe transversal entre une position abaissée sensiblement horizontale (figure 1) et une position relevée (figure 2). Un dispositif auxiliaire de commande au pied et/ou au manche permet d'assurer le freinage comme sur un vélo classique.

Le fonctionnement du mécanisme de commande 6 du cycle est le suivant :

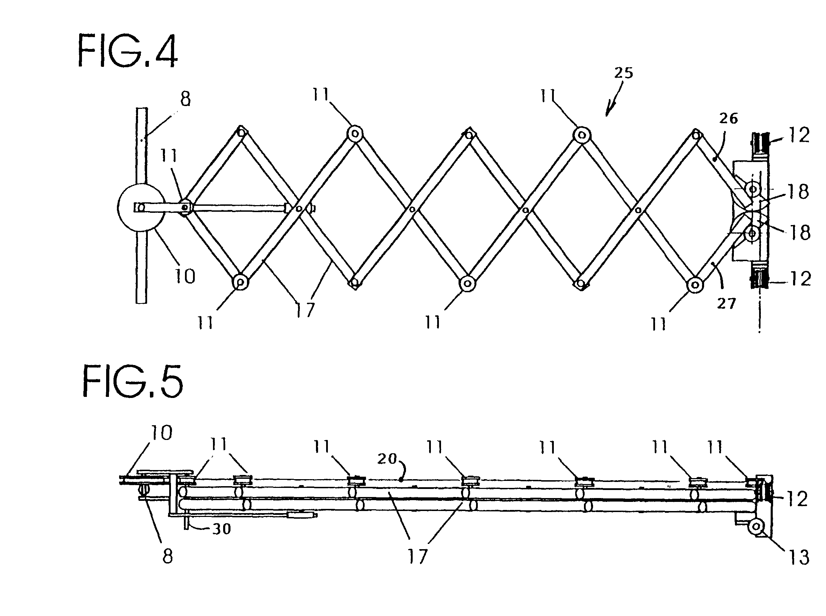

Après s'être assis sur le siège 7, et les pieds prenant appui dans les cale-pieds 3, l'utilisateur ramène dans une première phase le manche 8 vers soi, de manière à allonger le système d'actionnement 25 téléscopique (figure 4), et à tirer sur le câble tracteur 21 pour entraîner la chaîne 9 dans le sens de rotation de la roue motrice 5.

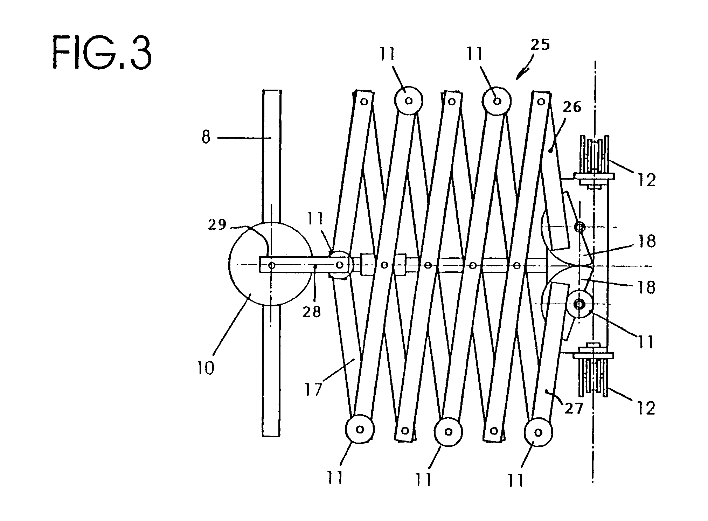

Dans la deuxième phase, l'utilisateur repousse le manche 8 vers l'avant pour rapprocher les parallélogrammes déformables du système d'actionnement 25 téléscopique l'un de l'autre (figure 3). Ce mouvement se traduit par un déplacement inverse du câble tracteur 21 permettant le retour en arrière de la chaîne 9 par l'intermédiaire de la roue libre 32 et de moyens de rappel. La motricité de la roue arrière 5 n'est pas assurée pendant cette deuxième phase de fonctionnement, mais la roue 5 continue de tourner grâce à la roue libre 32.

L'utilisateur effectue ainsi un mouvement de rameur en actionnant le manche 8 d'avant en amère, pour provoquer la rotation de la roue motrice 5 et l'avancement du cycle. Pour changer de direction, il suffit d'orienter le manche 8 comme un guidon de vélo, le mouvement du manche 8 étant transmis à la fourche avant 15 par le câble de direction 20. La présence du système d'actionnement 25 téléscopique permet de conserver en permanence l'axe vertical de rotation du manche 8 dans le plan médian de la poutre 1 lors des mouvements combinés de propulsion et de guidage.

Selon une variante de réalisation, le guidage en rotation de la roue avant 16 par l'intermédiaire du câble de direction 20, peut être opéré par tout autre moyen cinématique de transmission accouplé au manche 8.

Le dispositif de direction et de maintien DM peut avoir une longueur prédéterminée, et non téléscopique. L'entraînement de la chaîne 9 est alors effectué par le support 2 mobile des cale-pieds 3 susceptible de coulisser le long de la poutre 1 pour l'avancement du cycle.

## Revendications

1. Cycle à propulsion humaine comprenant:
- un châssis (CH) à poutre (1) rectiligne équipée d'une roue avant (16) directrice et d'une roue arrière (5) motrice,
- des moyens d'actionnement à manche (8) de préhension piloté par l'utilisateur selon un mouvement de va-et-vient de rameur,
- un mécanisme de commande (6) transformant ledit mouvement de va-et-vient en un mouvement de rotation de la roue arrière (5),
- et des moyens de guidage en rotation de la roue avant (16) directrice,
**caractérisé en ce que** le mécanisme de commande (6) comporte :
- un dispositif de direction et de maintien (DM) constitué par un système d'actionnement (25) téléscopique à tubes (17) articulés selon des parallélogrammes déformables dans la direction longitudinale de la poutre (1),
- et des moyens de centrage axial pour conserver en permanence l'axe du manche (8) dans le plan médian vertical passant par la poutre (1).

2. Cycle selon la revendication 1, **caractérisé en ce que** les moyens de centrage axial comportent au moins une paire de pignons (18) ou secteurs dentés reliés par des biellettes (26, 27) au système d'actionnement (25) téléscopique.

3. Cycle selon la revendication 1, **caractérisé en ce que** le mécanisme de commande (6) comprend un dispositif de transmission (DT) doté d'un câble tracteur (21) ayant une extrémité solidaire du manche (8) à mouvement de va-et-vient, et une extrémité opposée en liaison avec la chaîne (9) d'entraînement de la roue libre (32) de la roue arrière (5).

4. Cycle selon la revendication 3, **caractérisé en ce que** le câble tracteur (21) passe par au moins une poulie de renvoi (19) et l'intérieur creux de la poutre (1) centrale.

5. Cycle selon la revendication 1, **caractérisé en ce que** les moyens de guidage en rotation de la roue avant (16) directrice comportent un câble de direction (21) relié à une poulie de commande (10) solidaire du manche (8), et à une poulie de manoeuvre (14) accouplée à la fourche avant (15) rotative de la roue directrice (16).

6. Cycle selon la revendication 5, **caractérisé en ce que** la partie intermédiaire du câble de direction (21) passe en zig-zag sur des poulies (11) prévues le long des bords opposés des parallélogrammes du système d'actionnement (25) téléscopique, et sur au moins une poulie de renvoi (12, 13) située à l'avant du cycle.

7. Cycle selon l'une des revendications précédentes, **caractérisé en ce que** le dispositif de direction et de maintien (DM) est monté à pivotement limité autour d'un axe transversal entre une position abaissée sensiblement horizontale, et une position relevée.

8. Cycle selon l'une des revendications précédentes, **caractérisé en ce que** la poutre (1) est pourvue d'un siège (7) coulissant, et d'un étrier (2) de support des cale-pieds (3).

## Claims

1. A manpower-driven cycle comprising:
- a frame (CH) with a straight bar (1) equipped with a front steering wheel (16) and a rear drive wheel (5),
- actuating means with a gripping handle (8) operated by the user in a back-and-forth rowing movement,
- a driving mechanism (6) transforming said back-and-forth movement into a rotation movement of the rear wheel (5),
- and means for guiding the front steering wheel (16) in rotation,
wherein the driving mechanism (6) comprises:
- a steering and maintaining device (DM) formed by a telescopic actuating system (25) with tubes (17) articulated in parallelograms deformable in the longitudinal direction of the bar (1),
- and axial centering means to maintain the axis (8) of the handle constantly in the vertical mid-plane passing through the bar (1).

2. The cycle according to claim 1, wherein the axial centering means comprise at least one pair of toothed sprockets (18) or sectors linked by connecting rods (26, 27) to the telescopic actuating system (25).

3. The cycle according to claim 1, wherein the driving mechanism (6) comprises a transmission device (DT) equipped with a traction cable (21) having one end securedly affixed to the handle (8) with back-and-forth movement and an opposite end linked to the drive chain (9) of the rear wheel (5) freewheel (32).

4. The cycle according to claim 3, wherein the traction cable (21) passes via at least one counter-pulley (19) and through the hollow interior of the central bar (1).

5. The cycle according to claim 1, wherein the means for guiding the front steering wheel (16) in rotation, comprise a steering cable (20) linked to a driving pulley (10) securedly affixed to the handle (8) and to an operating pulley (14) coupled to the rotating front fork (15) of the steering wheel (16).

6. The cycle according to claim 5, wherein the intermediate part of the steering cable (20) zigzags on pulleys (11) provided along the opposite edges of the parallelograms of the telescopic actuating system (25) and on at least one counter-pulley (12, 13) located at the front of the cycle.

7. The cycle according to claim 1, wherein the steering and maintaining device (DM) is fitted with limited pivoting around a transverse axis between an appreciably horizontal lowered position and a raised position.

8. The cycle according to claim 1, wherein the bar (1) is provided with a sliding seat (7) and with a bracket (2) supporting foot-rests (3).

## Patentansprüche

1. Durch Muskelkraft angetriebenes Fahrrad, das:
- einen Rahmen (CH) mit einem geradlinigen Balken (1), der mit einem Vorderrad (16) zum Steuern und mit einem Hinterrad (5) zum Antreiben ausgestattet ist,
- Betätigungsmittel mit Handgriff (8), die vom Benutzer gemäß einer hin-und-her-Bewegung eines Ruderers geführt werden,
- einen Steuermechanismus (6), der die genannte hin-und-her-Bewegung in eine Rotationsbewegung des Hinterrades (5) umwandelt,
- und Rotationslenkmittel des Vorderrades (16) zum Steuern aufweist,
**dadurch gekennzeichnet, dass** der Steuermechanismus (6) umfaßt:
- eine Führungs- und Haltevorrichtung (DM), die aus einem teleskopischen Betätigungssystem (25) mit Rohren (17), die gemäß verformbaren Parallelogrammen in der Längsrichtung des Balkens (1) gegliedert sind, besteht,
- und axiale Zentrierungsmittel, um permanent die Achse des Handgriffs (8) in der vertikalen Mittelebene, die durch den Balken (1) geht, zu halten.

2. Fahrrad gemäß Anspruch 1, **dadurch gekennzeichnet, dass** die axialen Zentrierungsmittel mindestens ein Paar von Ritzeln (18) oder Zahnradkreisabschnitten umfassen, die durch Treibstangen (26, 27) mit dem teleskopischen Betätigungssystem (25) verbunden sind.

3. Fahrrad gemäß Anspruch 1, **dadurch gekennzeichnet, dass** der Steuermechanismus (6) eine Übertragungsvorrichtung (DT) umfaßt, die mit einem Zugkabel (21) ausgestattet ist, das ein mit dem Handgriff (8) der hin-und-her-Bewegung fest verbundenes Ende hat, und ein entgegengesetztes Ende, das mit der Antriebskette (9) des freien Rades (32) des Hinterrades (5) in Verbindung steht.

4. Fahrrad gemäß Anspruch 3, **dadurch gekennzeichnet, dass** das Zugkabel (21) durch mindestens ein Umlenkrolle (19) und das hohle Innere des zentralen Balkens (1) geführt wird.

5. Fahrrad gemäß Anspruch 1, **dadurch gekennzeichnet, dass** die Rotationslenkmittel des Vorderrades (16) zum Steuern ein Führungskabel (20) aufweisen, das mit einer fest mit dem Handgriff (8) verbundenen Steuerrolle (10) und mit einer an die rotative Vordergabel (15) des Rades zum Steuern (16) gekuppelte Handhabungsrolle (14) verbunden ist.

6. Fahrrad gemäß Anspruch 5, **dadurch gekennzeichnet, dass** der Zwischenteil des Führungskabels (20) im Zick-Zack über die Rollen (11), die entlang der gegenüberliegenden Seiten der Parallelogramme des teleskopischen Betätigungssystems (25) vorgesehen sind, und über mindestens eine im vorderen Bereich des Fahrrades befindliche Umlenkrolle (12, 13) verläuft.

7. Fahrrad gemäß einem der vorigen Ansprüche, **dadurch gekennzeichnet, dass** die Führungs- und Haltevorrichtung (DM) zur begrenzten Drehbewegung um eine Querachse zwischen einer in etwa horizontalen herabgesetzten Position und einer erhobenen Position montiert ist.

8. Fahrrad gemäß einem der vorigen Ansprüche, **dadurch gekennzeichnet, dass** der Balken (1) mit einem gleitenden Sitz (7) und mit einem Haltebügel (2) der Fußstützen (3) ausgestattet ist.
